# EUROPÄISCHE PATENTANMELDUNG

(11) **EP 0 882 950 A1**
(43) Veröffentlichungstag der Anmeldung: **09.12.1998**
(21) Anmeldenummer: 98107253.1
(22) Anmeldetag: 21.04.1998
(51) Int. Cl.: G01F 1/06, G01F 15/14

(54) **Zähler für fliessfähige Medien**

(30) Priorität: 02.06.1997 DE 29709554 U
(71) Anmelder: Körner, Hans-Holger, 23758 Oldenburg in Holstein (DE)
(72) Erfinder: Körner, Hans-Holger, 23758 Oldenburg in Holstein (DE)
(74) Vertreter: Glawe, Delfs, Moll & Partner

(57) **Zusammenfassung**

Zähler für fließfähige Medien mit einer kegelstumpfförmigen Meßkapsel (3), die in einen Gehäusetopf (2) eingesetzt ist. Die Ein- und Auslaßöffnungen (32) der Meßkapsel (3) sind von keilförmigen Kapseldichtflächen (33) umgeben, die mit komplementär keilförmigen Stutzendichtflächen (16) der bis an die Meßkapsel (3) herangeführten Rohranschlußstutzen (1) zusammenwirken. Die Rohranschlußstutzen (1) sind vom Gehäusetopf (2) gesondert und werden von ihm gehalten. Das Medium fließt durch die Rohranschlußstutzen (1) direkt in die Meßkapsel, ohne daß es mit dem Gehäusetopf (2) in Berührung kommt.

## Beschreibung

Die Erfindung bezieht sich auf einen Zähler für fließfähige Medien gemäß dem Oberbegriff des Anspruchs 1. Bei einem bekannten Zähler dieser Art (EP-A 682 234) ist für den Anschluß des Zählers an ein Rohr ein Rohranschlußgehäuse vorgesehen, das die mit dem Zählwerk verbundene Meßkapsel aufnimmt. Das Rohranschlußgehäuse weist an seiner Umfangswand Rohranschlußstutzen auf, deren innere Öffnungen von einander gegenüber-liegenden, gegensinnig keilförmig verlaufenden, zu einer offenen Stirnseite des Rohranschlußgehäuses hin auseinanderstrebenden Stutzendichtflächen umgeben sind. Die Ein- und Auslaßöffnungen der Meßkapsel sind von Kapseldichtflächen umgeben, die mit den Stutzendichtflächen zusammenwirken und zu diesen komplementär keilförmig verlaufen. Die Meßkapsel wird durch die offene Stirnseite des Rohranschlußgehäuses in dieses eingesetzt und durch einen an dem Rohranschlußgehäuse angreifenden Gewindering in dieser festgehalten, wodurch die Stutzen- und Kapseldichtflächen gegeneinander gepreßt werden. Da der Zwischenraum zwischen der Meßkapsel und dem Gehäusetopf drucklos ist und folglich vom Medium unberührt bleibt, ermöglicht es diese Konstruktion, etwaige Nebenschlüsse infolge nachlassender Dichtwirkung der Anschlüsse anhand des Austritts von Medium in den Zwischenraum sofort zu erkennen.

Da das Rohranschlußgehäuse ein aufwendiges Bauteil ist, sucht die Erfindung diesen Aufwand dadurch zu verringern, daß das Rohranschlußgehäuse aus einem einfachen, beispielsweise durch Tiefziehen erzeugten Gehäusetopf und davon gesonderten Rohranschlußstutzen besteht, die vom Gehäusetopf gehalten und durch dessen Öffnungen bis zur Meßkapsel hin durchgeführt sind, wobei der Gehäusetopf einerseits Haltesitze für die Rohranschlußstutzen bildet und andererseits mit der Halteeinrichtung für die Meßkapsel zusammenwirkt. Wenn die Dichtflächen der Kapsel und der Stutzen gegeneinander vollständig abgedichtet sind, ist der Gehäusetopf trocken und kann dieser sich auf die Funktion beschränken, die Stutzen in der vorgesehenen Position zu halten und Angriffsflächen für die Halteeinrichtung zu bilden, die die Kapseldichtflächen auf die Stutzendichtflächen preßt und die Kapsel in dem Gehäusetopf hält. Dazu ist es nicht unbedingt erforderlich, daß der Gehäusetopf die Meßkapsel vollständig umschließt. Aus Gründen des mechanischen Schutzes und der Abstützung der Meßkapsel sowie aus Gründen der Manipulationssicherheit ist dies jedoch zweckmäßig. Im übrigen kann sein Inneres mit der Atmosphäre in Verbindung stehen, da er nicht mediumführend ist. Dies ist sogar zweckmäßig, damit man etwaige Undichtheiten, die auch zu Meßfehlern führen könnten, durch den Austritt von Medium erkennt.

Zwar ist es bekannt, die Rohranschlußstutzen gesondert von dem Gehäuse herzustellen und anschließend mit diesen zu verbinden, indem sie damit verschraubt (GB-A-1376924, DE-C-806 735) oder verschweißt (GB-A-2023748) werden. Jedoch ist dies wesentlich aufwendiger als die erfindungsgemäße Anordnung, zumal der Gehäusetopf dabei vom Medium berührt ist und deshalb aus korrosionsbeständigem Material bestehen muß.

Der Gehäusetopf kann ein einfaches Blechformteil sein, das beispielsweise durch Tiefziehen erzeugt ist. Zweckmäßigerweise besteht er aus ferromagnetischem Material zum Schutz des Zählers vor magnetischer Manipulation. Er kann aber auch aus Kunststoff bestehen. Sein Rand kann als Teil eines Bajonett- oder Schraubverschlusses ausgebildet sein, an dem die Halteeinrichtung angreift.

Die Rohranschlußstutzen können herkömmlich aus Metall bestehen. Ein besonderer Vorteil der Erfindung besteht aber darin, daß sie auch als Kunststoff-Formteile hergestellt sein können. Die Haltesitze für die Rohranschlußstutzen im Gehäusetopf sind zweckmäßigerweise jeweils vom Rand einer Öffnung gebildet, der von einem Stutzenvorsprung hintergriffen ist. Dieser Stutzenvorsprung ist beispielsweise als ganz oder teilweise umlaufender Bund oder Flansch ausgebildet. Damit der Stutzen im Verhältnis zum Gehäusetopf durch die von außen angreifenden Anschlußkräfte nicht verdreht werden kann, sind der Haltesitz und der Stutzen zweckmäßigerweise mit zusammenwirkenden, die korrekte Einstellung sichernden Positioniereinrichtungen versehen. Dafür genügt es beispielsweise, die den Stutzen aufnehmende Öffnung in der Wand des Gehäusetopfs einerseits und den Umriß des in der Öffnung liegenden Teils des Stutzens ineinander passend und komplementär so auszuführen, daß sie vom Kreisquerschnitt abweichen. Sie können beispielsweise polygonal ausgeführt sein oder mit zusammenwirkenden Vorsprüngen und Ausnehmungen versehen sein.

Die Erfindung wird im folgenden näher unter Bezugnahme auf die Zeichnung erläutert, die ein vorteilhaftes Ausführungsbeispiel veranschaulicht. Es zeigen:
- Fig. 1: eine teilweise geschnittene Seitenansicht,
- Fig. 2: eine zu Figur 1 orthogonale Schnittansicht und
- Fig. 3: eine Ansicht eines Stutzens in Richtung III der Figur 1.

Der Zähler besteht hauptsächlich aus den Stutzen 1, die in einer Rohrleitung montierbar sind, dem Gehäusetopf 2, der Meßkapsel 3, die zählwerkseitig von einer Druckplatte 4 geschlossen ist, einem die Meßkapsel im Gehäusetopf 2 haltenden Bajonettring 5, und dem Zählwerk 6, das auf die Druckplatte 4 aufgesetzt ist und gleichfalls von dem Bajonettring 5 gehalten ist.

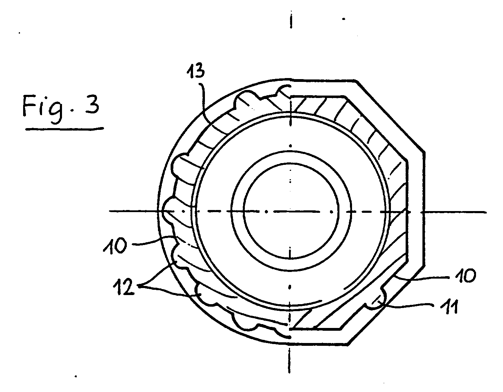

Der Gehäusetopf 2 ist ein vorzugsweise aus Metallblech tiefgezogener, hauptsächlich kegelstumpfförmiger Körper mit einer im wesentlichen kegeligen Seitenwand 7 und einem Boden 8. An einander diametral gegenüberliegenden Stellen ist die Seitenwand 7 zur Bildung von Öffnungen 9 ausgeschnitten, die jeweils einen Stutzen 1 aufnehmen. Die Öffnung ist übereinstimmend mit dem Umfangsbereich 10 des Stutzens 1 abweichend vom Kreisquerschnitt gestaltet, um dem Stutzen Verdrehfestigkeit im Verhältnis zum Gehäusetopf 2 zu sichern. Beispiele für die von der Kreisform abweichende Gestalt des Umfangsbereichs 10 des Stutzens erkennt man in Figur 3. Rechts der Mittellinie ist ein Ausführungsbeispiel dargestellt, in welchem der Umfangsbereich 10 als achteckiges Polygon ausgebildet ist. Dieselbe Gestalt hat die Öffnung 9. An einer Stelle des Umfangs ist ein Vorsprung 11 vorgesehen, der in eine entsprechende Ausnehmung des Öffnungsrands eingreift, um sicherzustellen, daß der Stutzen nicht winkelversetzt montiert werden kann. Auf der linken Seite der Mittellinie ist ein Ausführungsbeispiel veranschaulicht, bei welchem der Umfangsbereich 10 eine Vielzahl verteilter Vorsprünge 12 trägt, die in entsprechende Ausnehmungen des Öffnungsrands eingreifen. Um eine einzige, bestimmte Winkelstellung des Stutzens gegenüber dem Gehäusetopf 2 zu sichern, kann der Abstand der Vorsprünge 12 ungleichmäßig sein. Wenn er gleichmäßig ist, fehlt an einer Stelle 13 ein solcher Vorsprung und im Öffnungsrand eine entsprechende Ausnehmung.

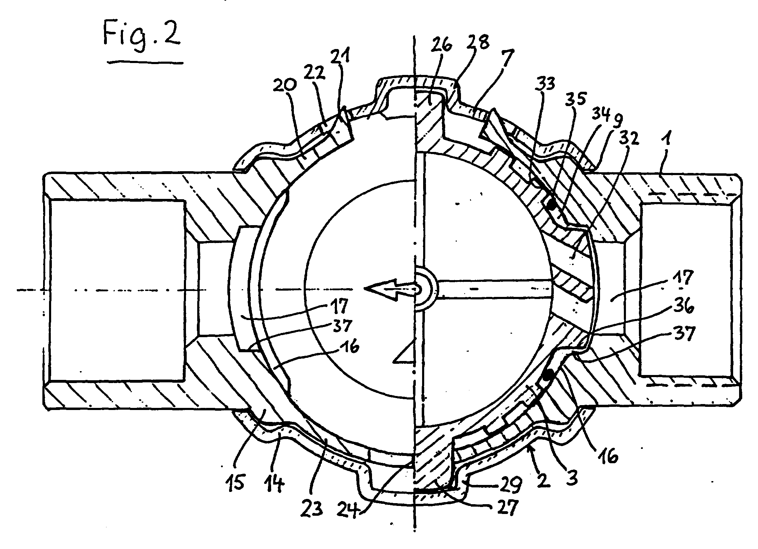

Der Öffnungsrand 14 kann, wie in Figur 2 gezeigt, gegenüber der sonstigen Kegelfläche der Wand 7 nach außen gewölbt sein, um einen Sitz zu bilden für einen am Stutzen 1 umlaufenden Bund 15. Die Anordnung ist so getroffen, daß die Stutzen 1 am Gehäusetopf 2 eine genau definierte Stellung einnehmen. Dem Inneren des Gehäusetopfs 2 wenden sie dann eine Stirnfläche 16 zu, die die innenseitige Öffnung 17 der Stutzen umgibt und als Stutzendichtfläche bezeichnet wird, weil sie dichtend mit entsprechenden Flächen der Meßkapsel zusammenwirkt. Die Stutzendichtflächen 16 der beiden in Figur 2 dargestellten Stutzen 1 ergänzen einander zu einer hohlkegeligen Form. Dies hat den Vorteil, daß die Kapsel sich dazwischen selbsttätig zentriert. Jedoch können die Stutzendichtflächen 16 - in Abstimmung auf die formentsprechenden Kapseldichtflächen - auch andere, beispielsweise ebene Gestalt haben.

Das äußere Ende der Stutzen 1 ist in dem in Figur 2 rechts dargestellten Beispiel als Gewindemuffe und in dem links dargestellten Beispiel als Klebemuffe ausgebildet. Es versteht sich, daß auch andere Techniken für die Verbindung mit einer Rohrleitung gewählt und in der Form der Stutzen ihren Ausdruck finden können.

Da die Stutzen durch das Zusammenwirken ihrer Dichtflächen mit der Meßkapsel an Ort und Stelle gehalten werden, bedarf es an sich keiner weiteren Mittel zu ihrer Fixierung. Jedoch können solche weiteren Mittel zweckmäßig sein, um sie auch dann an Ort und Stelle zu halten, wenn die Meßkapsel (noch) nicht eingesetzt ist. Zwei unterschiedliche Fixiereinrichtungen dieser Art sind in Figur 2 oberhalb und unterhalb der Mittellinie dargestellt. Im Beispiel oberhalb der Mittellinie gehen von den Stutzen 1 in Umfangsrichtung der Kapsel zwei Zungen 20 aus, die am Ende jeweils einen radial nach außen vorspringenden Zahn 21 tragen, der in eine Wandöffnung 22 des Topfs 2 eingreift und mit der dem jeweiligen Stutzen ferner liegenden Kante dieser Öffnung 22 derart zusammenwirkt, daß der Stutzen aus der dargestellten Position nicht entweichen kann, es sei denn, daß die Zunge 20 elastisch nach innen gedrückt wird. Im unteren Beispiel sind die gleichfalls elastischen Zungen 23 so lang ausgeführt, daß ihre Enden 24 in der mittleren Querebene der Anordnung stumpf zusammenstoßen und die Stutzen sich so gegenseitig in der vorgesehenen Lage abstützen. Statt dessen ist es auch möglich, die Stutzen mit dem Gehäusetopf 2 zu verkleben.

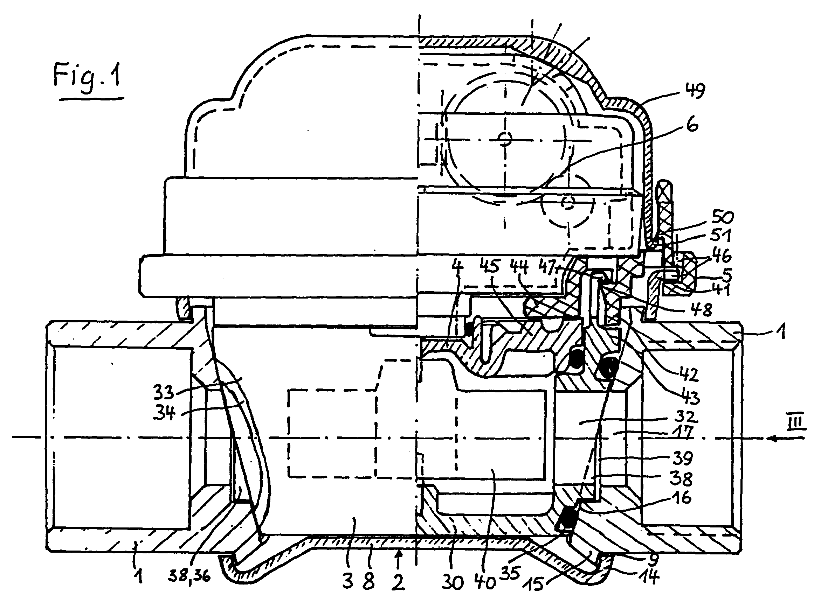

Die Meßkapsel 3 ist ähnlich konisch wie der Topf 2. Sie weist äußere Rippen 25 auf, mit denen sie sich entweder direkt oder über die Zungen 20, 23 an der Wand 7 des Topfs 2 abstützt. (Diese Rippen sind nur in Figur 2, nicht in Figur 1 gezeigt.) Auf diese Weise trägt der Topf zur Druckfestigkeit der Meßkapsel bei. In der mittleren Querebene der Anordnung weist die Meßkapsel 3 seitliche Vorsprünge 26, 27 auf, die in passenden Ausbuchtungen oder Nuten 28, 29 der Wand 7 des Topfs 2 liegen und die Meßkapsel innerhalb des Topfs positionieren. Der Vorsprung 27 und die zugehörige Ausbuchtung 29 sind breiter als der Vorsprung 26 und die Ausbuchtung 28. Dadurch wird sichergestellt, daß die Meßkapsel nicht in bezug auf die Strömungsrichtung um 180° verkehrt eingesetzt werden kann.

Wie man Figur 1 entnimmt, kann der Boden 30 der Meßkapsel 3 durch den entsprechend hochgezogenen Boden 9 des Topfs 2 abgestützt werden.

Die Meßkapsel enthält diametral zueinander versetzt angeordnete Ein- und Auslaßöffnungen 32, wobei die Einlaßöffnung in bekannter Weise von zur Längsrichtung geneigten Schlitzen gebildet sein kann. Die Ein- und Auslaßöffnungen 32 der Meßkapsel sind jeweils von Flächen 33 umgeben, die in ihrer Form den Stutzendichtflächen 16 entgegengesetzt gleichen und mit diesen fest und positionierend unmittelbar zusammenwirken. Sie enthalten eine Nut 34 zur Aufnahme eines Dichtrings 35, über den sie gegenüber den Stutzendichtflächen 16 abgedichtet sind. Sie werden deshalb als Meßkapseldichtflächen 33 bezeichnet. Der Flüssigkeitsweg ist von der Meßkapsel und den Stutzen völlig eingeschlossen, so daß der Raum zwischen der Meßkapsel und dem Topf 2 trocken bleibt, es sei denn, daß ein Dichtfehler vorhanden ist, der dann durch Flüssigkeitsaustritt bemerkt wird.

Die Zentrierung der Meßkapsel gegenüber den Stutzen kann durch zusammenwirkende Zentrierflächen 36, 37 gefördert werden, die meßkapselseits an einem Vorsprung 38 (Figur 1) und stutzenseits an einer Ausnehmung 39 angeordnet sind, die unterhalb der in Figur 1 erkennbaren Mittellinie innerhalb der beiderseitigen Dichtflächen vorgesehen sind.

Die dem Boden gegenüberliegende Öffnung der Meßkapsel 3 wird durch die Druckplatte 4 geschlossen, die gegenüber der Meßkapsel abgedichtet ist. Das Flügelrad 40 kann in bekannter Weise zwischen dem Boden 30 und der Druckplatte 4 gelagert sein.

Der Öffnungsrand 41 des Topfes 2 und der Verschlußring 5 sind als komplementäre Teile eines Bajonettverschlusses ausgebildet. Ihre die Verschlußkraft übertragenden Flächen sind zweckmäßigerweise derart geneigt ausgebildet, daß eine hohe Verschlußkraft erzeugt werden kann, durch die die Meßkapsel 3 fest in den Topf 2 eingepreßt wird, um einen festen Sitz der kapselseitigen und der stutzenseitigen Dichtflächen 16 bzw. 33 aufeinander zu gewährleisten. Um die Verschlußkraft auf die Meßkapsel zu übertragen, ist der Verschlußring 5 mit einem Ringteil 42 versehen, der auf den Rand 43 der Meßkapsel wirkt. Ferner ist der Verschlußring 5 mit einem Ringteil 44 versehen, der mit dem Rand 45 der Druckplatte 4 zusammenwirkt, um diese in der vorgesehenen Position festzuhalten. Der Flansch 41 des Topfs 2 und der Verschlußring 5 enthalten an geeigneter Stelle Bohrungen oder Ausnehmungen 46 zur Sicherung und gegebenenfalls Verplombung der Verschlußstellung.

Am Rand 43 der Meßkapsel 3 ist eine Reihe von über den Umfang verteilten Rastvorsprüngen 47 vorgesehen, die in montiertem Zustand gemäß Figur 1 hinter einen Rastrand 48 des Ringteils 42 greifen. Wenn die Druckplatte 4 auf die Meßkapsel 3 aufgesetzt ist und der Verschlußring 5 mit den Rastvorsprüngen 47 verrastet ist, sind die Meßkapsel 3, die Druckplatte 4 und der Verschlußring 5 zu einer gemeinsam handhabbaren Einheit miteinander verbunden. Auf diese Einheit ist das Zählwerk 6 aufgesetzt. In diesem Zustand ist das Flügelrad 40 mit dem Meßantrieb des Zählwerks 6 in nicht näher dargestellter Weise gekuppelt. Die Haube 49 des Meßwerks weist an ihrem Rand einen umlaufenden Rastvorsprung 51 oder eine Mehrzahl über den Umfang verteilter entsprechender Rastvorsprünge auf, die in montiertem Zustand hinter einen entsprechenden, umlaufenden Rastvorsprung 50 des Verschlußrings 5 faßt und dadurch gesichert ist.

## Patentansprüche

1. Zähler für fließfähige Medien mit einem Rohranschlußgehäuse, das an seiner Umfangswand (7) Rohranschlußstutzen (1) aufweist, deren innere Öffnungen (17) von einander gegenüberliegenden Stutzendichtflächen (16) umgeben sind, die gegensinnig keilförmig zur offenen Stirnseite des Gehäusetopfs (2) hin auseinanderstreben und einer von dem Rohranschlußgehäuse aufgenommenen Meßkapsel (3), deren Ein- und Auslaßöffnungen (32) von mit den Stutzendichtflächen (16) zusammenwirkenden, komplementär keilförmigen Meßkapseldichtflächen (33) umgeben sind, sowie einer an dem Rohranschlußgehäuse angreifenden Halteeinrichtung (5), die die Meßkapsel (3) im Rohranschlußgehäuse und die Stutzendichtflächen (16) mit dem Gußkapseldichtflächen (33) in gegenseitigem Eingriff hält, dadurch gekennzeichnet, daß das Rohranschlußgehäuse von einem mit der Halteeinrichtung (5) zusammenwirkenden Gehäusetopf (2) sowie davon gesonderten, vom Gehäusetopf (2) gehaltenen und durch die Öffnungen (9) des Gehäusetopfs (2) bis zur Meßkapsel (3) hindurchgeführten Rohranschlußstutzen (1) gebildet ist.

2. Zähler nach Anspruch 1 oder 2, dadurch gekennzeichnet, daß der Gehäusetopf (2) die Meßkapsel (3) im wesentlichen vollständig umschließt.

3. Zähler nach einem der Ansprüche 1 bis 3, dadurch gekennzeichnet, daß das Innere des Gehäusetopfs (2) mit der Atmosphäre in Verbindung steht.

4. Zähler nach einem der Ansprüche 1 bis 4, dadurch gekennzeichnet, daß der Gehäusetopf (2) ein Blechformteil ist.

5. Zähler nach Anspruch 5, dadurch gekennzeichnet, daß das Material des Gehäusetopfs (2) ferromagnetisch ist.

6. Zähler nach einem der Ansprüche 1 bis 6, dadurch gekennzeichnet, daß der Rand (41) des Gehäusetopfs (2) als Teil eines Bajonett- oder Schraubverschlusses ausgebildet ist, an dem die Halteeinrichtung (5) angreift.

7. Zähler nach einem der Ansprüche 1 bis 7, dadurch gekennzeichnet, daß die Haltesitze (14) für die Rohranschlußstutzen (1) von dem Rand einer Öffnung (9) gebildet sind, der von einem Stutzenvorsprung (15) hintergriffen ist.

8. Zähler nach Anspruch 8, dadurch gekennzeichnet, daß die Haltesitze (14) und die Stutzen (1) mit zusammenwirkenden, die korrekte Einstellung der Stutzen sichernden Positioniereinrichtungen versehen sind.

9. Zähler nach einem der Ansprüche 1 bis 9, dadurch gekennzeichnet, daß die Rohranschlußstutzen (1) aus Kunststoff bestehen.
